# EUROPÄISCHE PATENTSCHRIFT

(11) **EP 2 750 857 B1**
(45) Veröffentlichungstag und Bekanntmachung des Hinweises auf die Patenterteilung: **31.10.2018**
(21) Anmeldenummer: 12756686.7
(22) Anmeldetag: 31.08.2012
(51) Int. Cl.: B29C 47/08, B29C 47/60, F16D 1/10, B29C 47/40, B29C 47/64

(54) **EXTRUDERSCHNECKE, EXTRUDER UND VERFAHREN ZUM HERSTELLEN EINER EXTRUDERSCHNECKE**
EXTRUDER SCREW, EXTRUDER, AND METHOD FOR PRODUCING AN EXTRUDER SCREW
VIS D'EXTRUDEUSE, EXTRUDEUSE ET PROCÉDÉ DE FABRICATION D'UNE VIS D'EXTRUDEUSE

(30) Priorität: 01.09.2011 DE 102011112148
(43) Veröffentlichungstag der Anmeldung: 09.07.2014
(73) Patentinhaber: KraussMaffei Berstorff GmbH, 30625 Hannover (DE)
(72) Erfinder: BEHLING, Michael, 31787 Hameln (DE)
(74) Vertreter: Roider, Stephan
(86) Internationale Anmeldenummer: PCT/EP2012/066937
(87) Internationale Veröffentlichungsnummer: WO 2013/030322

(56) Entgegenhaltungen:
- EP-A1- 1 632 331
- WO-A1-2010/038235
- DE-A1-102005 053 907
- DE-A1-102006 029 471
- JP-A- 2004 044 660
- US-A- 2 038 554
- US-A- 5 797 677
- US-A1- 2010 303 537

## Beschreibung

Die Erfindung betrifft eine Extruderschnecke mit einer Extruderwelle und zumindest einem Extrudersegment. Die Extruderwelle umfasst einen prismatischen Dorn mit einer Außenverzahnung und einer Dorn-Längsachse. Das Extrudersegment weist eine Innenverzahnung und eine Innenverzahnungs-Längsachse auf und ist auf den Dorn aufschiebbar, so dass das Extrudersegment drehfest mit dem Dorn verbindbar ist. Die Innenverzahnung hat ein Profil mit einem Eingriffsprofil und weist in einem Innenbereich zwischen der ersten und der zweiten Stirnseite des Extrudersegmentes ein prismatisches Grund-Profil auf, das einen Grund-Querschnitt besitzt.

Gemäß einem zweiten Aspekt betrifft die Erfindung einen Extruder, insbesondere einen Doppelschneckenextruder, mit einer erfindungsgemäßen Extruderschnecke.

Gemäß einem dritten Aspekt betrifft die Erfindung ein Verfahren zum Herstellen einer erfindungsgemäßen Extruderschnecke oder eines Extruders.

Extruder besitzen in aller Regel einen Dorn mit einer Außenverzahnung, auf dem Extrudersegmente drehfest angeordnet sind. Das ermöglicht es, die Extrudersegmente auszutauschen oder zu wechseln, sofern dies notwendig ist. Es besteht der Wunsch, Extruder mit einem möglichst hohen Drehmoment zu betreiben, so dass hohe Durchsatzleistungen erreichbar sind. Der Erhöhung des Drehmoments sind jedoch Grenzen gesetzt, da es oberhalb eines kritischen Drehmoments zur Zerstörung des Extrudersegments kommt. Die Druckschrift US 5 797 677 offenbart eine Extruderschnecke mit einem Dorn und einem auf den Dorn aufschiebbaren Extrudersegment.

Der Erfindung liegt die Aufgabe zugrunde, bei gleichem Dorn das Drehmoment zu erhöhen, d.h. eine Extruderschnecke oder einen Extruder mit erhöhter Drehmomentaufnahme bereitzustellen.

Die Erfindung löst das Problem durch eine Extruderschnecke mit den Merkmalen vom Anspruch 1.

Gemäß einem zweiten Aspekt löst die Erfindung das Problem durch einen gattungsgemäßen Extruder mit zumindest einer erfindungsgemäßen Extruderschnecke.

Gemäß einem dritten Aspekt löst die Erfindung das Problem durch ein Verfahren zum Herstellen einer erfindungsgemäßen Extruderschnecke mit den Schritten (a) Herstellen eines prismatischen Dorns mit einer Außenverzahnung durch Hämmern mit einem Hammerwerkzeug, (b) Herstellen eines Vor-Extrudersegments, das eine prismatische Innenverzahnung hat, (c) Herstellen eines Erodierwerkzeugs mit dem Hammerwerkzeug und (d) Herstellen der Profilabweichung bzw. Profilkorrektur der Innenverzahnung durch Senkerodieren mit dem Erodierwerkzeug.

Vorteilhaft an der Erfindung ist, dass die Extruderschnecke mit einem höheren Drehmoment beaufschlagt werden kann, bevor es zu Schäden kommt.

Es ist ein weiterer Vorteil, dass die Erfindung mit geringem Aufwand umsetzbar ist. So ist es lediglich notwendig, die Extrudersegmente an ihrem Rand zu bearbeiten, während das übrige Design des Extruders nicht geändert werden muss.

Der Erfindung liegt der Gedanke zugrunde, einen herkömmlichen, prismatischen Dorn mit einer Außenverzahnung zu verwenden und ein oder mehrere auf den Dorn aufzuschiebende Extrudersegmente mit einer Innenverzahnung so zu gestalten, dass sie zwar drehfest mit dem Dorn verbunden sind, aber im Bereich zumindest einer Stirnseite des Extrudersegmentes ein etwa keilförmiger Zwischenraum zwischen den Flanken der Innen- und der Außenzähne, also seitlich an den Zähnen, entsteht. Diese Zwischenräume sind jedoch nur so lang, dass eine drehfeste Verbindung von Dorn und Extrudersegmenten möglich ist. Die Flanken der Innenzähne der Extrudersegmente weisen im Bereich der Zwischenräume vorteilhafterweise eine Krümmung auf, um eine weiche Kontur der Innenverzahnung zu erhalten. Dabei liegt der Erfindung die Erkenntnis zugrunde, dass es vorteilhaft ist, die Innenverzahnung lokal zu schwächen, damit sich insgesamt eine höhere Verschleißfestigkeit ergibt. Diese Erkenntnis wurde anhand von Verschleißbildern von Extrudersegmenten gewonnen. Es hat sich nämlich herausgestellt, dass es bei einem rein prismatischen Profil sowohl des Dorns als auch der Extrudersegmente unmittelbar an der Stirnseite der Extrudersegmente zu Belastungsspitzen kommt, die zu Mikrokerben führen, von denen ein Anriss ausgehen kann.

Im Rahmen der vorliegenden Beschreibung wird unter dem Merkmal, dass das Rand-Profil einen kleineren Rand-Querschnitt als das Grund-Profil hat, verstanden, dass die Projektion des Rand-Querschnitts entlang der Dorn-Längsachse auf eine Ebene senkrecht zur Dorn-Längsachse zumindest im Bereich des Eingriffsprofils kleiner als das Rand-Profil ist. Es ist möglich, dass Bereiche des Grund-Profils existieren, die sich über diese Projektion erstrecken, maßgeblich ist, dass das Rand-Profil im Bereich des Eingriffsprofils einen kleineren Rand-Querschnitt hat. Das Eingriffsprofil ist derjenige Teil des Profils, über den eine in Umfangsrichtung wirkende Last übertragen wird.

Unter dem Profil wird die zweidimensionale Oberfläche der Innenverzahnung im jeweiligen Bereich verstanden. Das Grund-Profil ist der Teil des Profils im Innenbereich. Das Rand-Profil ist der Teil des Profils benachbart zur Stirnseite.

Unter dem jeweiligen Querschnitt, also dem Grund-Querschnitt oder dem Rand-Querschnitt, wird der Querschnitt durch die Innenverzahnung senkrecht zur Innenverzahnungs-Längsachse der Innenverzahnung im Bereich des jeweiligen Profils verstanden.

Gemäß einer bevorzugten Ausführungsform hat die Innenverzahnung eine Verzahnungs-Längsachse, wobei das Profil einen gedachten Zylindermantel, dessen Längsachse koaxial zur Innenverzahnungs-Längsachse der Innenverzahnung und auf halber Zahnhöhe verläuft, in einem Eingriffsprofil-Längsverlauf schneidet, wobei der Eingriffsprofil-Längsverlauf im mathematischen Sinne glatt ist. Hierunter ist zu verstehen, dass der Eingriffsprofil-Längsverlauf stets stetig differenzierbar ist. Diese Angabe bezieht sich auf ein Zylinderkoordinatensystem, dessen Achse entlang der Verzahnungs-Längsachse verläuft.

Der Eingriffsprofil-Längsverlauf verläuft im Innenbereich gradlinig, dass heißt, er ist eine Gerade, da das Grund-Profil prismatisch ist. Benachbart zu der zumindest einen Stirnseite verläuft der Eingriffsprofil-Längsverlauf gekrümmt, wobei insbesondere ein Krümmungsradius mit zunehmendem Abstand von der Stirnseite größer wird. Vorteilhaft hieran ist, dass die Gefahr einer erhöhten Kerbwirkung minimiert wird.

Vorzugsweise ist das Profil spiegelsymmetrisch bezüglich einer Symmetrieebene, die senkrecht auf der Innenverzahnungs-Längsachse steht und vorzugsweise auf halber Strecke zwischen der Stirnseite und einer zweiten Stirnseite verläuft.

Die Innenverzahnung besitzt erfindungsgemäß eine Profilkorrektur, die die Abweichung des Rand-Querschnitts vom Grund-Querschnitt und damit in Abhängigkeit von einem Randabstand von der nächstgelegenen Stirnfläche beschreibt, wobei die Profilkorrektur sich bis zu einem Randabstand von der nächstgelegenen Stirnfläche von zumindest 2 mm, insbesondere zumindest 5 mm, erstreckt.

Die Profilkorrektur wird damit bei gegebenem Randabstand gebildet durch die Menge, die gebildet ist durch die Projektion des Grund-Querschnitts entlang der Längsachse des Dorns auf die Ebene, die senkrecht auf dem Dorn steht, vermindert um den Rand-Querschnitt. Die Profilkorrektur ist damit für jeden Abstand von der nächstgelegenen Stirnfläche eine vom Randabstand abhängige Fläche.

Der Flächeninhalt der Profilkorrektur nimmt vorzugsweise mit zunehmendem Abstand von der nächstgelegenen Stirnfläche ab, insbesondere streng monoton. Auf diese Weise kann sich das Extrudersegment über einen relativ breiten Bereich im Lastfall an die Außenverzahnung anschmiegen, so dass sich eine besonders gute Krafteinleitung ergibt, was die Verschleißwahrscheinlichkeit mindert.

Die Profilkorrektur erstreckt sich erfindungsgemäß über eine Profilkorrekturlänge, die höchstens ein Drittel der Extrudersegment-Breite beträgt. Es hat sich gezeigt, dass eine größere Profilkorrekturlänge kontraproduktiv ist.

Vorzugsweise hat die Profilkorrektur eine Profilkorrekturhöhe, die kleiner ist als eine Zahnhöhe der Innenverzahnung abzüglich eines Fußrundungsradius. Das stellt sicher, dass durch das Einbringen der Profilkorrektur keine unerwünschten kleinen Kerbradien eingebracht werden.

Vorzugsweise ist die Innenverzahnung eine Evolventenverzahnung. Es hat sich herausgestellt, dass eine derartige Verzahnung zu einer besonders geringen Versagenswahrscheinlichkeit führt. Bei dem Verfahren zum Herstellen des Extrudersegments wird die Profilabweichung durch Senkerodieren eingebracht. Hierdurch lässt sich eine besonders hohe Maßhaltigkeit erreichen, was wiederum die Wahrscheinlichkeit für ein Versagen des Extrudersegments senkt.

Erfindungsgemäß, wird das Senkerodieren mit einem Erodierwerkzeug durchgeführt, das mit dem gleichen Hammerwerkzeug herstellt wird wie der Dorn des Extruders. Das stellt sicher, dass die Profilabweichung für jeden Zahn der Innenverzahnung gleich ist, so dass sich die Last besonders gleichmäßig verteilt.

Im Folgenden wird die Erfindung anhand der beigefügten Zeichnungen näher erläutert. Dabei zeigt
- Figur 1a: eine maßstabgerechte perspektivische Ansicht eines erfindungsgemäßen Extrudersegments,
- Figur 1b: einen vergrößerten Ausschnitt gemäß Figur 1a,
- Figur 1c: eine Vorderansicht eines Zahns der Innenverzahnung auf Höhe der Stirnfläche,
- Figur 1d: eine Draufsicht auf den Zahn gemäß Figur 1c,
- Figur 2a: einen Querschnitt durch einen Dorn einer Extruderwelle eines erfindungsgemäßen Extruders und
- Figur 2b: eine abschnittsweise Seitenansicht des Dorns gemäß Figur 2a.

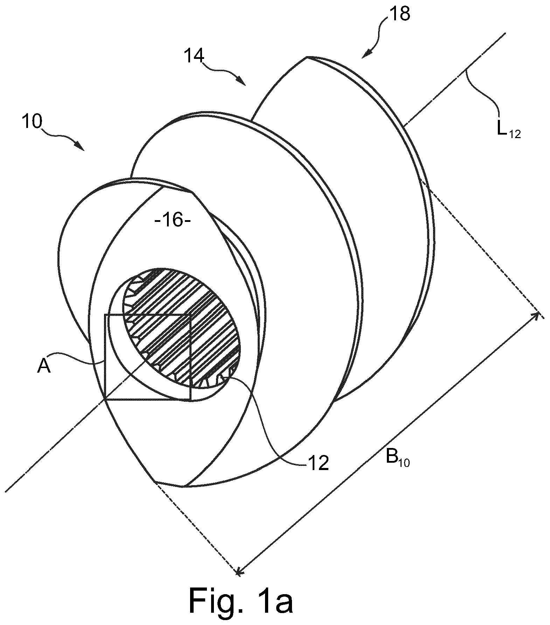

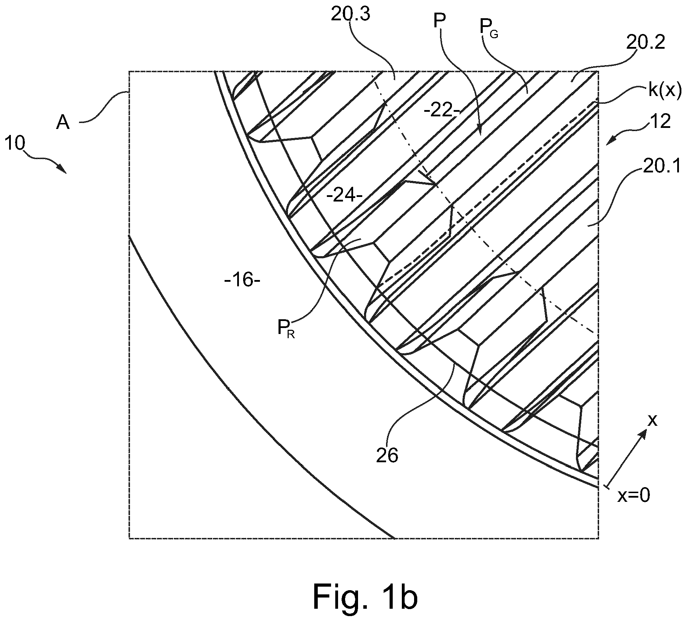

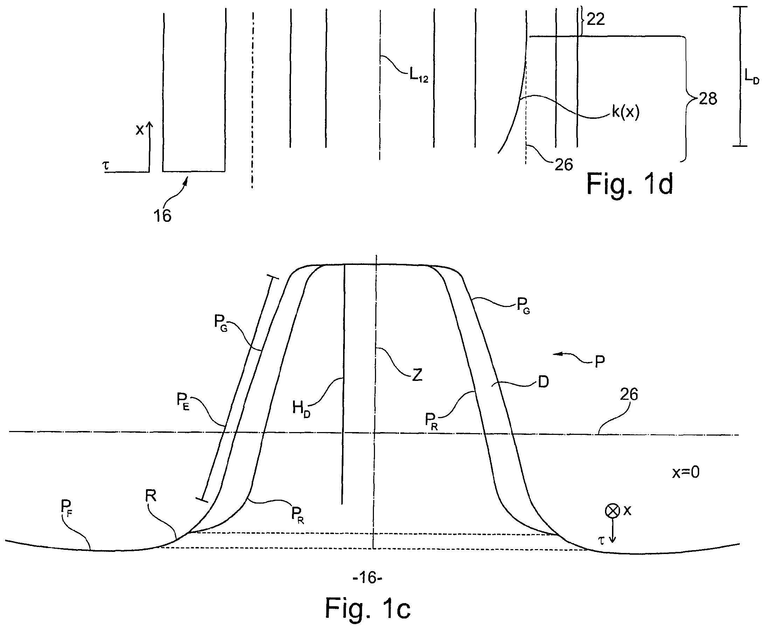

Figur 1 zeigt ein erfindungsgemäßes Extrudersegment 10, das eine Innenverzahnung 12 aufweist, mittels derer es auf eine komplementäre Außenverzahnung eines Dorns einer Extruderwelle drehfest aufschiebbar ist. Die Innenverzahnung 12 besitzt ein Eingriffsprofil P, das in Figur 1c gezeigt ist.

Figur 1a zeigt, dass das Extrudersegment 10 eine Außenschnecke 14 umfasst. Alternativ kann das Extrudersegment 10 beispielsweise eine Förder-, Knet- oder Mischstruktur aufweisen.

Das Extrudersegment 10 besitzt eine erste Stirnseite 16 und eine der ersten Stirnseite 16 gegenüberliegende zweite Stirnseite 18, die parallel zur ersten Stirnseite 16 verläuft. Die Innenverzahnung 12 hat eine Verzahnungs-Längsachse L₁₂, entlang der das Extrudersegment 10 eine Segmentbreite B₁₀ hat.

Figur 1b zeigt den Ausschnitt A gemäß Figur 1a. Es ist zu erkennen, dass die Innenverzahnung 12 eine Vielzahl an Zähnen 20.1, 20.2, ... besitzt, die jeweils die gleiche Kontur haben. Die Innenverzahnung 12 hat einen Innenbereich 22, an dem sich ein stirnseitiger Bereich 24 anschließt. Die Grenze zwischen Innenbereich 22 und stirnseitigem Bereich 24 ist durch eine Strichpunktlinie gekennzeichnet.

Im Innenbereich 22 hat die Innenverzahnung 12 ein prismatisches Grund-Profil P_{G}, dessen Grund-Querschnitt in Figur 1c gezeigt ist. Figur 1b zeigt zudem, dass die Innenverzahnung 12 im stirnseitigen Bereich 24 ein Rand-Profil P_{R} hat, dessen Rand-Querschnitt ebenfalls in Figur 1c gezeigt ist. Unter dem Profil P wird die zweidimensionale Oberfläche der Innenverzahnung im jeweiligen Bereich verstanden. Das Grund-Profil ist der Teil des Profils P im Innenbereich 22, das Rand-Profil P_{R} ist der Teil des Profils P im stirnseitigen Bereich 24, der auch Randbereich genannt werden könnte.

Unter dem jeweiligen Querschnitt, also dem Grund-Querschnitt bzw. dem Rand-Querschnitt, wird der Querschnitt durch die Innenverzahnung 12 senkrecht zur Innenverzahnungs-Längsachse L₁₂ (vgl. Figur 1a) der Innenverzahnung 12 im Bereich des jeweiligen Profils verstanden.

Benachbart zur Stirnseite 16 hat die Innenverzahnung 12 das Rand-Profil P_{R} mit dem Rand-Querschnitt, der kleiner ist als der Grund-Querschnitt. In Figur 1b ist das dadurch zu erkennen, dass sich die Innenverzahnung 12 benachbart zur Stirnseite 16 zur Stirnfläche hin verjüngt. Wird das Extrudersegment 10 auf den prismatischen Dorn der Extruderwelle aufgesetzt, so entsteht benachbart zur Stirnseite 16 eine kleine Lücke, in der die Innenverzahnung 12 nicht vollflächig an der Außenverzahnung des Dorns anliegt.

Figur 1c zeigt eine Vorderansicht eines Zahns, beispielsweise Zahn 20.1, auf Höhe der Stirnfläche 16. Das entspricht einer Projektion des Profils entlang der Dorn-Längsachse auf eine Ebene, nämlich die Zeichnungsebene, die senkrecht zur Dorn-Längsachse verläuft. Zu erkennen sind das Grund-Profil P_{G} und das Rand-Profil P_{R} in Form des Grund-Querschnitts und des Rand-Querschnitts. Der Rand-Querschnitt ist kleiner als der Grund-Querschnitt.

Figur 1b zeigt zudem einen gedachten Zylindermantel 26, der in Figur 1c als Strichpunktlinie eingezeichnet ist und auf halber Zahnhöhe Z verläuft. Dieser gedachte Zylindermantel 26 schneidet das Profil P in einem Eingriffsprofil-Längsverlauf k(x), der in Figur 1d eingezeichnet ist. Figur 1d ist eine Draufsicht auf den Zahn gemäß Figur 1c.

Figur 1d zeigt den Blick von oben auf das Profil, das gegen x als Längenkoordinate entlang der Innenverzahnungs-Längsachse L₁₂ aufgetragen ist. x=0 gilt für den Punkt, in dem die Innenverzahnungs-Längsachse L₁₂ die Ebene schneidet, in der die Stirnseite 16 liegt. Es ist zu erkennen, dass der Eingriffsprofil-Längsverlauf k(x) im Innenbereich 22 eine Gerade ist und in einem Randbereich 28 gekrümmt verläuft. Der Eingriffsprofil-Längsverlauf k(x) ist glatt, dass heißt stetig differenzierbar. Das gilt insbesondere an der Grenze zwischen Randbereich 28 und Innenbereich 22.

Das Rand-Profil P_{R} ist vom Abstand x von der Stirnfläche 16 abhängig. Figur 1c zeigt die Situation für x=0, dass heißt direkt an der ersten Stirnseite 16. Es ist die Profilkorrektur D erkennbar, die die Fläche zwischen dem Grund-Querschnitt und dem Rand-Querschnitt bezeichnet. Äquivalent ist die Beschreibung der Profilkorrektur D als die Fläche zwischen der Projektion des Grund-Profils auf eine Ebene senkrecht zur Innenverzahnungs-Längsachse L₁₂ im Randabstand x und dem Schnitt des Rand-Profils mit dieser Ebene.

Die Profilkorrektur D ist damit vom Randabstand x abhängig. Die Profilkorrektur D erstreckt sich von der Stirnfläche 16 bis zu einem Randabstand x, der als Profilkorrekturlänge L_{D} bezeichnet wird. Die Profilkorrekturlänge L_{D} ist in Figur 1d eingezeichnet. Sie beträgt höchstens ein Drittel der Extrudersegment-Breite B₁₀, die in Figur 1a eingezeichnet ist.

Die Profilkorrektur D besitzt zudem eine Profilkorrekturhöhe H_{D}, die diejenige Erstreckung entlang der Radialachse r bezeichnet, auf deren Höhe die Profilkorrektur D vorliegt. Die Profilkorrekturhöhe H_{D} ist vorzugsweise kleiner als die Zahnhöhe Z abzüglich eines Fußrundungsradius R, mit dem das Eingriffsprofil P_{E} des Grundprofils P_{G} in einen Fußbereich P_{F} übergeht.

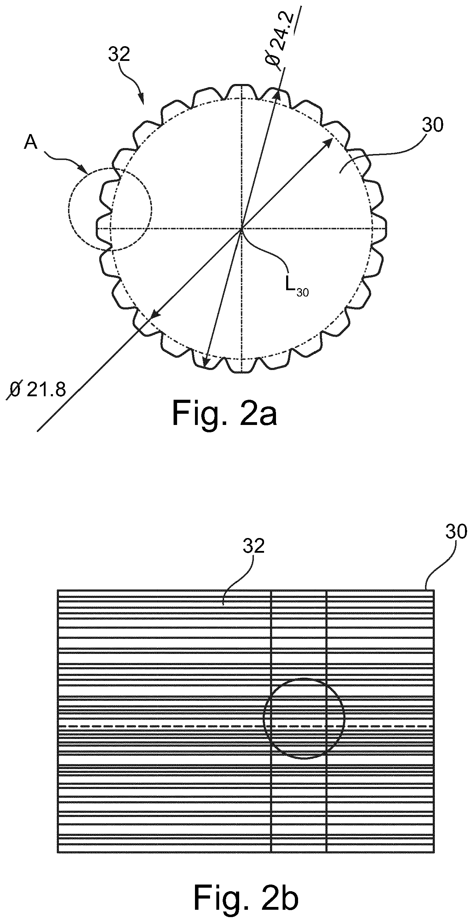

Figur 2a zeigt einen Querschnitt durch einen Dorn 30 einer Extruderwelle eines erfindungsgemäßen Extruders. Der Dorn 30 umfasst eine Außenverzahnung 32, die komplementär zur Innenverzahnung 12 ausgebildet ist. Der Dorn 30 besitzt eine Dorn-Längsachse L₃₀, die mit der Innenverzahnungs-Längsachse L₁₂ (vgl. Figur 1a) zusammenfällt.

Figur 2b zeigt den Dorn 30 abschnittsweise in einer Längsansicht, in der die Außenverzahnung 32 zu sehen ist.

Ein erfindungsgemäßes Extrudersegment 10 wird insbesondere dadurch hergestellt, dass zunächst ein Vor-Extrudersegment mit einer prismatischen Innenverzahnung hergestellt wird. Nachfolgend wird durch Senkerodieren die Profilkorrektur D hergestellt. Zur Erodierbehandlung wird vorzugsweise ein Erodierwerkzeug verwendet, das auch zur Herstellung der Außenverzahnung 32 des Dorns 30 verwendet wurde.

### Bezugszeichenliste

- 10: Extrudersegment
- 12: Innenverzahnung
- 14: Außenschnecke
- 16: erste Stirnseite
- 18: zweite Stirnseite
- 20: Zahn
- 22: Innenbereich
- 24: stirnseitiger Bereich
- 26: Zylindermantel
- 28: Randbereich
- 30: Dorn
- 32: Außenverzahnung

- B₁₀: Extruder-Segmentbreite
- D: Profilkorrektur
- L_{D}: Profilkorrekturlänge
- H_{D}: Profilkorrekturhöhe
- k(x): Eingriffsprofil-Längsverlauf
- L₁₂: Innenverzahnungs-Längsachse
- L₃₀: Dorn-Längsachse
- P: Profil
- P_{E}: Eingriffsprofil
- P_{G}: Grund-Profil
- P_{R}: Rand-Profil
- R: Fußrundungsradius
- x: Randabstand
- Z: Zahnhöhe

## Patentansprüche

1. Extruderschnecke mit
einer Extruderwelle, die einen prismatischen Dorn (30) mit einer Außenverzahnung (32) und einer Dorn-Längsachse (L₃₀) umfasst, und
zumindest einem auf den Dorn (30) aufschiebbaren Extrudersegment (10) mit einer Innenverzahnung (12) und einer Innenverzahnungs-Längsachse (L₁₂),
wobei die Innenverzahnung (12) ein Profil (P) mit einem Eingriffsprofil (P_{E}) hat und in einem Innenbereich (22) zwischen der ersten Stirnseite (16) und der zweiten Stirnseite (18) ein prismatisches Grund-Profil (P_{G}) mit einem Grund-Querschnitt aufweist,
wobei die Innenverzahnungs-Längsachse (L₁₂) koaxial zur Dorn-Längsachse (L₃₀) verläuft und die Innenverzahnung (12) mit der Außenverzahnung (32) kämmt, so dass das Extrudersegment (10) drehfest mit dem Dorn (30) verbunden ist,
wobei die Innenverzahnung (12) benachbart zu zumindest einer Stirnseite ein Rand-Profil (P_{R}) aufweist, das zumindest im Bereich des Eingriffsprofils (P_{E}) einen kleineren Rand-Querschnitt als das Grund-Profil (P_{G}) hat,
wobei die Innenverzahnung (12) eine Profilkorrektur (D), die die Abweichung des Rand-Querschnitts vom Grund-Querschnitt in Abhängigkeit von einem Randabstand (x) von der nächstgelegenen Stirnfläche (16) beschreibt, besitzt und die Profilkorrektur (D) sich bis zu einem Randabstand (x) von der nächstgelegenen Stirnfläche (16) von zumindest 2 Millimetern erstreckt, und
wobei die Profilkorrektur (D) sich über eine Profilkorrekturlänge (L_{D}) erstreckt, die höchstens ein Drittel der Extrudersegment-Breite (B₁₀) beträgt.

2. Extruderschnecke nach Anspruch 1, wobei
das Profil (P) einen gedachten Zylindermantel (26), dessen Längsachse koaxial zur Innenverzahnungs-Längsachse (L₁₂) der Innenverzahnung (12) und auf halber Zahnhöhe verläuft, in einem Eingriffsprofil-Längsverlauf (k(x)) schneidet und
der Eingriffsprofil-Längsverlauf (k(x)) im mathematischen Sinn glatt ist.

3. Extruderschnecke nach einem der vorstehenden Ansprüche, wobei
die Profilkorrektur (D) eine Profilkorrekturhöhe (H_{D}) hat, die kleiner ist als eine Zahnhöhe (Z) der Innenverzahnung (12) abzüglich eines Fußrundungsradius (R).

4. Extruderschnecke nach einem der vorstehenden Ansprüche, wobei
die Innenverzahnung (12) eine Evolventenverzahnung ist.

5. Extruderschnecke nach einem der vorstehenden Ansprüche, wobei
das Profil (P) spiegelsymmetrisch bezüglich einer Symmetrieebene ist, die senkrecht zur Innenverzahnung-Längsachse (L₁₂) und mittig zwischen der ersten Stirnseite (16) und einer zweiten Stirnseite (18), die der ersten Stirnseite (16) gegenüber liegt, verläuft.

6. Extruder, insbesondere Doppelschneckenextruder, mit
zumindest einer Extruderschnecke nach einem der Ansprüche 1 bis 5.

7. Verfahren zum Herstellen einer Extruderschnecke nach einem der Ansprüche 1 bis 5, umfassend die Schritte:
(a) Herstellen eines prismatischen Dorns (30) mit einer Außenverzahnung (32) durch Hämmern mit einem Hammerwerkzeug,
(b) Herstellen eines Vor-Extrudersegments mit einer prismatischen Innenverzahnung (12),
(c) Herstellen eines Erodierwerkzeugs mit dem Hammerwerkzeug und
(d) Herstellen einer Profilkorrektur (D) der Innenverzahnung (12) durch Senkerodieren mit dem Erodierwerkzeug.

## Claims

1. An extruder screw with
an extruder shaft, which comprises a prismatic mandrel (30) with external teeth (32) and with a mandrel longitudinal axis (L₃₀), and
at least one extruder segment (10), able to be slid onto the mandrel (30), with internal teeth (12) and with an internal teeth longitudinal axis (L₁₂),
wherein the internal teeth (12) have a profile (P) with a meshing profile (P_{E}) and, in an inner region (22) between the first end face (16) and the second end face (18), has a prismatic main profile (P_{G}) with a main cross-section,
wherein the internal teeth longitudinal axis (L₁₂) runs coaxially to the mandrel longitudinal axis (L₃₀) and the internal teeth (12) mesh with the external teeth (32), so that the extruder segment (10) is connected to the mandrel (30) in a torque-proof manner,
wherein the internal teeth (12) have, adjacent to at least one end face, an edge profile (P_{R}), which at least in the region of the meshing profile (P_{E}) has a smaller edge cross-section than the main profile (P_{G}),
wherein the internal teeth (12) have a profile correction (D), which describes the deviation of the edge cross-section from the main cross-section as a function of an edge distance (x) from the nearest end face (16), and the profile correction (D) extends up to an edge distance (x) from the nearest end face (16) of at least 2 millimetres, and
wherein the profile correction (D) extends over a profile correction length (L_{D}) which is at most one third of the extruder segment width (B₁₀).

2. The extruder screw according to claim 1, wherein
the profile (P) intersects an imaginary cylinder surface (26), the longitudinal axis of which runs coaxially to the internal teeth longitudinal axis (L₁₂) of the internal teeth (12) and at half a tooth height, in a meshing profile longitudinal course (k(x)) and
the meshing profile longitudinal course (k(x)) is smooth in the mathematical sense.

3. The extruder screw according to one of the preceding claims, wherein
the profile correction (D) has a profile correction height (H_{D}), which is smaller than a tooth height (Z) of the internal teeth (12) minus a base rounding radius (R).

4. The extruder screw according to one of the preceding claims, wherein
the internal teeth (12) are involute teeth.

5. The extruder screw according to one of the preceding claims, wherein
the profile (P) is mirror-symmetrical with respect to a plane of symmetry which runs perpendicularly to the internal teeth longitudinal axis (L₁₂) and centrally between the first end face (16) and a second end face (18), which lies opposite the first end face (16).

6. An extruder, in particular a double screw extruder, with
at least one extruder screw according to one of claims 1 to 5.

7. A method for producing an extruder screw according to one of claims 1 to 5, comprising the steps:
(a) producing a prismatic mandrel (30) with external teeth (32) by hammering with a hammer tool,
(b) producing a pre-extruder segment with prismatic internal teeth (12),
(c) producing an eroding tool with the hammer tool and
(d) producing a profile correction (D) of the internal teeth (12) by sink erosion with the eroding tool.

## Revendications

1. Vis d'extrudeuse comprenant
un arbre d'extrudeuse qui comprend un mandrin prismatique (30) avec une denture extérieure (32) et un axe longitudinal de mandrin (L₃₀) et
au moins un segment d'extrudeuse (10) pouvant être déplacé sur le mandrin (30) avec une denture intérieure (12) et un axe longitudinal de denture intérieure (L₁₂),
dans laquelle la denture intérieure (12) a un profilé (P) avec un profilé d'engrènement (P_{E}) et présente dans une partie intérieure (22) entre la première face avant (16) et la deuxième face avant (18), un profilé de base (P_{G}) prismatique avec une section transversale de base,
dans laquelle l'axe longitudinal de denture intérieure (L₁₂) est coaxial à l'axe longitudinal de mandrin (L₃₀) et engrène la denture intérieure (12) avec la denture extérieure (32) de façon à ce que le segment d'extrudeuse (10) soit relié fixe en rotation avec le mandrin (30),
dans laquelle la denture intérieure (12) présente dans le voisinage d'au moins une face avant, un profilé de bord (P_{R}) qui a une section transversale de bord plus petite que le profilé de base (P_{G}) au moins au niveau du profilé d'engrènement (P_{E}),
dans laquelle la denture intérieure (12) possède une correction de profilé (D) qui décrit l'écart de la section transversale de bord de la section transversale de base en fonction d'une distance de bord (x) de la face avant (16) la plus proche, et la correction de profilé (D) s'étend d'au moins 2 millimètres jusqu'à une distance de bord (x) de la face avant (16) la plus proche, et
dans laquelle la correction de profilé (D) s'étend sur une longueur de correction de profilé (L_{D}) qui fait au plus un tiers de la largeur de segment d'extrudeuse (B₁₀).

2. Vis d'extrudeuse selon la revendication 1, dans laquelle
le profilé (P) coupe une enveloppe de cylindre (26) non matérialisée dont l'axe longitudinal est coaxial à l'axe longitudinal de denture intérieure (L₁₂) de la denture intérieure (12) et à demi-hauteur de dent, dans un tracé longitudinal de profilé d'engrènement (k(x)) et
le tracé longitudinal de profilé d'engrènement (k(x)) est lisse au sens mathématique.

3. Vis d'extrudeuse selon l'une des revendications précédentes, dans laquelle
la correction de profilé (D) présente une hauteur de correction de profilé (H_{D}) qui est inférieure à une hauteur de dent (Z) de la denture intérieure (12) moins un rayon d'embase de denture (R).

4. Vis d'extrudeuse selon l'une des revendications précédentes, dans laquelle
la denture intérieure (12) est une denture à développante.

5. Vis d'extrudeuse selon l'une des revendications précédentes, dans laquelle
le profilé (P) est en symétrie de miroir par rapport à un plan de symétrie qui est vertical à l'axe longitudinal de denture intérieure (L₁₂) et central entre la première face avant (16) et une deuxième face avant (18) qui est face à la première face avant (16).

6. Extrudeuse, en particulier extrudeuse à double vis comprenant
au moins une vis d'extrudeuse selon l'une des revendications 1 à 5.

7. Procédé de fabrication d'une vis d'extrudeuse selon l'une des revendications 1 à 5 comprenant les étapes :
(a) de fabrication d'un mandrin prismatique (30) avec une denture extérieure (32) par martelage avec un outil à marteler,
(b) fabrication d'un pré-segment d'extrudeuse avec une denture intérieure (12) prismatique,
(c) fabrication d'un outil à éroder avec l'outil à marteler et
(d) fabrication d'une correction de profilé (D) de la denture intérieure (12) par enfonçage par électro-érosion avec l'outil à éroder.
